# FASCICULE DE BREVET EUROPEEN

(11) **EP 3 891 462 B1**
(45) Date de publication et mention de la délivrance du brevet: **26.10.2022**
(21) Numéro de dépôt: 19797378.7
(22) Date de dépôt: 28.10.2019
(51) Int. Cl.: G01B 5/00, G01B 7/26, B60C 11/24, G01M 17/007, F16B 5/02, F16B 43/00

(54) **SYSTÈME DE FIXATION POUR BOITIER DE MESURE DE CARACTÉRISTIQUES DE PNEUMATIQUE**
BEFESTIGUNGSSYSTEM FÜR GEHÄUSE ZUR MESSUNG DER EIGENSCHAFTEN EINES REIFENS
FIXING SYSTEM FOR HOUSING FOR MEASURING TYRE CHARACTERISTICS

(30) Priorité: 07.12.2018 FR 1872511
(43) Date de publication de la demande: 13.10.2021
(73) Titulaire: Compagnie Générale des Etablissements Michelin, 63000 Clermont-Ferrand (FR)
(72) Inventeur: LEROY, Vianney, 63040 Clermont-Ferrand Cedex 9 (FR)
(74) Mandataire: Béniguel, Jean-François Joseph Emile
(86) Numéro de dépôt international: PCT/IB2019/059211
(87) Numéro de publication internationale: WO 2020/115581

(56) Documents cités:
- EP-A1- 0 919 763
- EP-A1- 2 148 126
- WO-A1-2019/034968
- DE-A1- 4 115 014
- US-A1- 2017 030 806
- US-A1- 2018 216 644

## Description

### DOMAINE TECHNIQUE DE L'INVENTION

La présente invention concerne un système de fixation au sol pour boitier de détection de caractéristiques de pneumatiques, la fixation du boîtier étant conçue de façon à bien supporter les fortes contraintes liées aux passages de nombreux véhicules sur le boîtier, ledit système de fixation au sol comprenant une plaque de fixation comprenant une pluralité de logements répartis sur la surface de la plaque de fixation, une pluralité d'anneaux de serrage tronconiques et une pluralité de tunnels cylindriques de guidage agencés dans le boîtier de détection.

### ETAT DE LA TECHNIQUE ANTERIEURE

Le document WO 2014202747 décrit un système de mesure de l'épaisseur d'une couche de matériau caoutchouteux d'un pneumatique. Il prend la forme d'un boitier à fixer au sol. En utilisation, ce type de boitier est soumis à de fortes contraintes du fait de nombreux passages de véhicules de tous types, y compris des poids lourds. Malgré ces fortes contraintes, le boîtier ne doit pas se déplacer ou se soulever. Les boîtiers sont donc souvent fixés au sol grâce à des aménagements importants effectués dans le sol. Ces aménagements impliquent d'importants travaux, longs et coûteux. Par ailleurs, si jamais un boîtier s'avère être mal positionné, tout déplacement nécessite également d'importants travaux, avec des équipements lourds. Il existe donc un besoin pour permettre de fixer et repositionner facilement les boîtiers de mesure, avec une mise en œuvre simplifiée.

**Le** document FR3007517 décrit un système de mesure de l'épaisseur d'une couche de gomme de pneumatique. Ce système utilise une source de champ magnétique statique et un élément de mesure du champ magnétique. Un tel système est prévu pour mise en place dans un boîtier sur lequel les véhicules roulent. Les mesures sont prises au moment du passage des roues sur le boîtier. Le boitier doit pouvoir résister à des charges importantes. Les contraintes de charge sont liées à la quantité de véhicules roulant sur le boitier et à leur poids. Par ailleurs, des dysfonctionnements des différents éléments électroniques peuvent être provoqués notamment par des vibrations lors du passage des véhicules.

Le document US 2017030806 décrit un système de mesure de profondeur de bande de roulement comprenant un appareil de mesure de la bande de roulement, un processeur, un support et un appareil d'avertissement. L'appareil de mesure de la bande de roulement est positionné sur le sol et configuré pour mesurer une profondeur de bande de roulement. Le support est une plaque posée sur le sol, au dessus d'une fosse où sont placés les éléments de mesure. Cette méthode de mesure oblige à prévoir une installation complexe et coûteuse avec une cavité spécifiquement aménagée dans le sol afin de pouvoir y installer le système.

Pour pallier ces différents inconvénients, l'invention prévoit différents moyens techniques.

### EXPOSE DE L'INVENTION

Tout d'abord un premier objectif de l'invention consiste à prévoir un système de fixation pour boîtier de mesure de caractéristiques de pneumatiques qui soit simple et rapide à implanter dans le sol.

**Un** autre objectif de l'invention consiste à prévoir un système de fixation pour boîtier de mesure de caractéristiques de pneumatique économique et facilement industrialisable.

**Un** autre objectif de l'invention consiste à prévoir un système de fixation pour boîtier de mesure de caractéristiques de pneumatique ne perturbant pas le fonctionnement du boîtier de mesure.

Un autre objectif de l'invention consiste à prévoir un système de fixation pour boîtier de mesure de caractéristiques de pneumatique permettant de déplacer facilement et rapidement le boîtier latéralement selon une pluralité d'emplacements potentiels.

Pour ce faire, l'invention prévoit un ensemble de détection de caractéristiques de pneumatiques, comprenant un boîtier électronique de détection de caractéristiques de pneumatiques, et un système de fixation au sol pour ledit boitier de détection de caractéristiques de pneumatiques, la fixation du boîtier étant conçue de façon à bien supporter les fortes contraintes liées aux passages de nombreux véhicules sur le boîtier, ledit système de fixation au sol comprenant :
i) une plaque de fixation comprenant une pluralité de logements répartis sur la surface de la plaque de fixation ;
ii) une pluralité d'anneaux de serrage tronconiques ;
iii) une pluralité de tunnels cylindriques de guidage agencés dans le boîtier de détection ;
ledit ensemble de détection étant caractérisé en ce que les anneaux de serrage et les tunnels de guidage comportent chacun une portion conique complémentaire convergente vers la plaque de fixation lorsque l'anneau est en position de serrage dans un tunnel.

La solution permet de fixer sans jeu les différents éléments du système de détection. L'absence de jeu ou la présence d'un jeu minimaliste permet de réduire les sources d'usure prématurées du système. Le maintien ferme des différents éléments permet d'assurer de bonnes qualités opérationnelles. La fixation est par ailleurs durable. La suppression des jeux d'assemblage permet de limiter l'usure par abrasion et donc garantir une durée de vie importante. La solution est simple et facile à industrialiser. Elle comporte peu de pièces. De plus, le montage et les manipulations d'installation sont simples. Ces caractéristiques permettent de créer un système de fixation très simple, peu coûteux et robuste.

Selon un mode de réalisation avantageux, la portion conique de chacun des anneaux est conformée sur le profil externe desdits anneaux, dans la portion médiane de ce profil.

Selon un autre mode de réalisation avantageux, la portion conique de chacun des tunnels est conformée sur le profil interne des tunnels, à la sortie dudit tunnel. La zone de sortie du tunnel correspond à la zone de jonction entre le tunnel et la plaque de fixation.

De manière avantageuse, les tunnels cylindriques sont venus de matière avec le boîtier de détection. Par exemple, le tunnel est directement percé dans la masse du boîtier. Ce mode de réalisation est simple et peu coûteux à réaliser.

Egalement de manière avantageuse, les tunnels cylindriques sont des inserts fixés dans des trous prévus à cet effet dans le boîtier de détection.

Ce mode de réalisation permet de prévoir un matériau spécifique pour l'insert, différent du matériau du boîtier, par exemple une bague en acier ou laiton insérée et collée dans un boîtier en matériau thermodurcissable.

Selon un mode de réalisation avantageux, le niveau de serrage de chacun des anneaux de serrage est réglé par une vis traversant l'anneau et coopérant avec la plaque de fixation.

Selon un autre mode de réalisation avantageux, le serrage de chacun des anneaux est réglé par une vis traversant l'anneau et coopérant avec un écrou agencé dans la plaque de fixation.

Il s'agit d'un système simple, fiable, permettant une mise en place rapide avec un ajustement aisé du niveau de serrage.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est une vue en perspective d'un exemple d'un ensemble de détection de caractéristiques de pneumatiques ;
- la figure 2 est une vue de dessus d'un exemple de plaque de fixation ;
- la figure 3 est une vue en perspective d'un exemple de boitier électronique de détection de caractéristiques de pneumatiques ;
- la figure 4 est une représentation schématique en coupe d'un exemple de système de fixation pour boîtier de mesure de caractéristiques de pneumatiques ;
- la figure 5 est variante de réalisation du système de fixation de la figure 4.

### DESCRIPTION DETAILLEE DE L'INVENTION

### BOITIER DE MESURES DE CARACTERISTIQUES DE PNEUMATIQUES

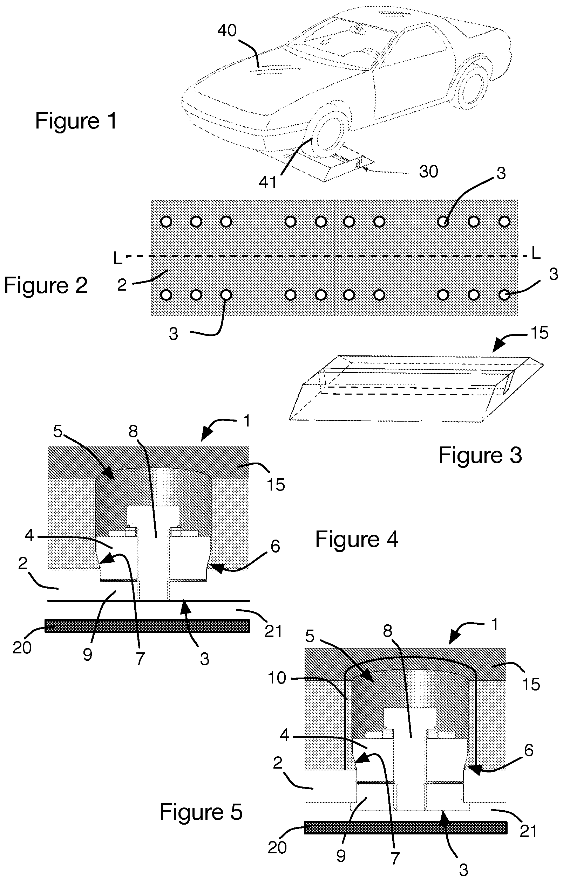

La figure 1 illustre un exemple d'un ensemble 30 connu de mesure de l'épaisseur d'une couche de matériau caoutchouteux d'un pneumatique 41 d'un véhicule 40, tel que celui décrit dans le document FR3007517. L'ensemble 30 comprend un boitier 15 électronique de détection de caractéristiques de pneumatiques et une plaque 2 de fixation tels qu'illustrés aux figures 2 et 3. Lorsque le véhicule 40 roule sur le boîtier 15 électronique de détection de caractéristiques de pneumatiques, des capteurs permettent d'effectuer une ou plusieurs mesures, comme par exemple des mesures d'épaisseur de bande de roulement du pneumatique 41. Pour effectuer les mesures, le dispositif est préférentiellement placé à un emplacement facilitant le passage des véhicules 40. Le mode de fixation du boîtier est donc avantageusement conçu de façon à bien supporter les fortes contraintes liées aux passages de nombreux véhicules. Ces contraintes requièrent une fixation fiable et durable, tel que décrit dans les figures suivantes.

La figure 2 illustre un exemple de plaque 2 de fixation. Dans cet exemple, la plaque est divisée en deux parties jointes l'une à l'autre pour fournir une plus grande largeur. La plaque 2 de fixation est fixée au sol par un moyen classique, comme par exemple une couche 21 de colle. La plaque comporte une pluralité de logements 3. Dans l'exemple illustré, les logements 3 sont alignés dans le sens longitudinal de la plaque, parallèlement aux bords et espacés de façon régulière. Chacun des logements 3 peut accueillir un anneau 4 de serrage tronconique (décrit ultérieurement en relation avec les figures 4 et 5). La longueur de la plaque 2 de fixation est préférentiellement supérieure à celle du boitier 15 électronique de détection de caractéristiques de pneumatiques à fixer et le nombre de logements 3 est supérieur au nombre d'anneaux 4 de serrage tronconiques à loger afin de permettre de positionner le boîtier 15 à une pluralité d'emplacements le long de l'axe longitudinal L-L de la plaque 2 de fixation. La géométrie de la plaque 2 de fixation et la méthode d'installation permettent alors de déplacer facilement le système de quelques centimètres pour s'adapter au mieux à la distribution statistique des passages connue après quelques temps d'utilisation du système.

La figure 3 illustre un exemple de réalisation d'un boitier 15 électronique de détection de caractéristiques de pneumatiques. Dans l'exemple, celui-ci est en forme de pavé biseauté afin de faciliter la montée et la descente du véhicule 40. Une fente peut être agencée dans le boitier 15 afin de permettre d'effectuer les mesures.

### FIXATION DU BOITIER SUR LA PLAQUE

Les figures 4 et 5 illustrent un exemple de réalisation du système 1 de fixation. Dans ces exemples, le boitier 15 est fixé à la plaque 2 à l'aide d'une pluralité d'anneaux 4 de serrage tronconiques insérés dans autant de tunnels 5 cylindriques de guidage de formes et de dimensions complémentaires à celles des anneaux 4. Ces formes et dimensions complémentaires sont prévues de façon à permettre une mise en place aisée des anneaux 4 dans les tunnels avant serrage, puis pour fournir un serrage à double effet lorsque la vis 8 de serrage est mise en place et serrée.

**Chaque** anneau comporte un corps annulaire, avec un perçage axial pour insertion d'une vis 8 de serrage. Le profil externe d'un anneau comporte une portion conique 6, s'étendant sur tout ou partie de la face latérale de l'anneau. Dans les exemples illustrés aux figures 4 et 5, la portion conique 6 est agencée dans la zone médiane de la bague, soit sensiblement à mi-hauteur du pourtour externe. Pour permettre une fixation d'un boîtier 15 sans jeu axial, et sans jeu radial, le boîtier comporte une pluralité de tunnels 5 cylindriques de guidage répartis sur la surface du boîtier afin de fournir une pluralité de points de fixation. Chacun des tunnels consiste en une ouverture traversante, prévue dans le boîtier. Dans les exemples illustrés, le profil interne des tunnels est cylindrique, avec une portion conique 7 prévue au voisinage de la face du boîtier qui est en contact avec la plaque 2 lorsque le boîtier 15 est fixé à cette dernière.

**Ainsi,** grâce à cette architecture complémentaire des anneaux 4 et des tunnels 5, les anneaux 4 de serrage tronconiques et les tunnels 5 cylindriques de guidage comportent une portion conique 6, 7 complémentaire convergente vers la plaque 2 de fixation. Une vis 8 de serrage, traversant l'anneau 4 et vissant directement dans la plaque 2 (percée et filetée à cet effet) ou dans un écrou 9 prévu sous la plaque, permet de réaliser une fixation du boîtier de sorte que le serrage exerce une force de maintien tant axiale que radiale. La force de serrage axiale pousse le boîtier contre la plaque de fixation. La force de serrage radiale agit de façon uniforme sur toute la circonférence de l'anneau et produit une force de maintien sur toute la face interne du tunnel. Le matériau de la bague est avantageusement choisi pour se déformer légèrement sous l'action du serrage de la vis 8, de façon à appuyer sur la portion conique 7 du tunnel sur 360°.

### TUNNEL PERCAGE OU TUNNEL BAGUE

Selon le type de réalisation prévue, le tunnel 5 cylindrique peut être venu de matière avec le boitier 15 de détection, tel qu'illustré dans l'exemple de la figure 4. Dans ce cas, le tunnel est par exemple réalisé par perçage du boîtier. En variante, les tunnels 5 cylindriques sont prévue dans des inserts 10 fixés dans le boitier 15, tel qu'illustré dans l'exemple de la figure 5. Ce mode de réalisation permet de réaliser des tunnels avec un matériau différent de celui du boîtier.

### PRINCIPE DE FONCTIONNEMENT DU CAPTEUR MAGNETIQUE DE MESURE DE CARACTERISTIQUES DE PNEUMATIQUE

Le capteur de type connu permet de mesurer l'épaisseur d'une couche de matériau caoutchouteux d'un pneumatique, comme par exemple la bande de roulement. De façon classique, une telle couche comporte une face liée à une armature adjacente réalisée avec au moins un matériau de perméabilité magnétique supérieure à la perméabilité magnétique de l'air et une face libre en contact avec l'air. Le capteur est conçu pour mesurer la distance entre la face liée et la face libre de la couche de matériau caoutchouteux.

Le capteur comporte une source de champ magnétique statique et un élément sensible dont le signal de sortie est fonction du niveau du champ magnétique local, disposé de telle sorte que l'intensité du champ magnétique mesurée par l'élément sensible varie lorsque la distance à mesurer diminue.

Les épaisseurs des bandes de roulement ont une épaisseur très faible à mesurer. Par conséquent, la mesure requiert une précision extrême.

Afin d'assurer une mesure précise et fiable, il est nécessaire que les différents éléments constituants la chaine de mesure soient parfaitement maintenus, si possible sans jeu ou avec un jeu le plus faible possible. Le moindre jeu entre les éléments du capteur et/ou entre les éléments du capteur et le boîtier pourrait affecter la qualité ou la fiabilité des mesures. Tel que préalablement décrit, les éléments sont fixés de telle sorte qu'il n'y ait qu'un minimum de vibrations, et/ou de déplacement des pièces du système.

### MATERIAUX

La solution est dimensionnée pour résister au freinage d'un camion à 70km/h, et à des centaines de milliers de passages d'essieux. Les choix de matériaux et de géométrie de l'anneau 4 de serrage tronconique et du tunnel 5 cylindrique et de la plaque 2 sont prévus pour résister aux sollicitations mécaniques, notamment le cisaillement, la compression, et le matage.

La plaque est avantageusement réalisée avec un matériau thermodurcissable à faible absorption d'eau, résistant aux hydrocarbures. Le choix d'un thermodurcissable permet d'avoir une excellente permittivité électrique, perméabilité magnétique et de faibles pertes diélectriques.

La plaque 2 de fixation est avantageusement fabriquée en polyester, de préférence renforcé de fibre de verre (GPO3). Le GPO3 est par ailleurs un matériau à faible tension de surface, à bonne porosité et à bonne affinité avec de nombreuses résines de collage.

Les anneaux 4 de serrage tronconiques sont avantageusement fabriqués en polyamide, de préférence en PA 66, avantageux du fait de sa résilience, son faible fluage et sa résistance chimique.

**On** prévoit de préférence un matériau de la plaque 2 de dureté plus élevée que celui de l'anneau 4 de serrage tronconique, ce qui permet d'obtenir une dégradation des anneaux 4 avant celle de la plaque 2. En effet, le remplacement des anneaux 4 de serrage tronconiques est simple et économique comparé à celui de la plaque 2.

**Numéros de référence employés sur les figures**

| | |
|---|---|
| 1 | Système de fixation au sol pour boitier |
| 2 | Plaque de fixation |
| 3 | Logement |
| 4 | Anneau de serrage tronconique |
| 5 | Tunnel cylindrique de guidage |
| 6 | Portion conique d'anneau |
| 7 | Portion conique de tunnel |
| 8 | Vis |
| 9 | Ecrou |
| 10 | Insert |
| | |
| 15 | Boitier de mesure (par exemple de caractéristiques de pneumatique) |
| | |
| 20 | Enrobé |
| 21 | Colle |
| | |
| 30 | Ensemble de détection de caractéristiques de pneumatiques |
| | |
| 40 | Véhicule |
| 41 | Pneumatique |

## Revendications

1. Ensemble (30) de détection de caractéristiques de pneumatiques, comprenant un boitier (15) électronique de détection de caractéristiques de pneumatiques, et un système (1) de fixation au sol pour ledit boitier (15) de détection de caractéristiques de pneumatiques, la fixation du boîtier étant conçue de façon à bien supporter les fortes contraintes liées aux passages de nombreux véhicules sur le boîtier, ledit système (1) de fixation au sol comprenant :
i) une plaque (2) de fixation comprenant une pluralité de logements (3) répartis sur la surface de la plaque de fixation ;
ii) une pluralité d'anneaux (4) de serrage tronconiques ;
iii) une pluralité de tunnels (5) cylindriques de guidage agencés dans le boîtier (15) de détection ;
ledit ensemble de détection étant **caractérisé en ce que** les anneaux (4) de serrage et les tunnels (5) de guidage comportent chacun une portion conique (6, 7) complémentaire convergente vers la plaque (2) de fixation lorsque l'anneau (4) est en position de serrage dans un tunnel (5).

2. Ensemble (30) de détection selon la revendication 1, dans lequel la portion conique (6) de chacun des anneaux (4) est conformée sur le profil externe desdits anneaux, dans la portion médiane de ce profil.

3. Ensemble (30) de détection selon l'une quelconque des revendications 1 ou 2, dans lequel la portion conique de chacun des tunnels (5) est conformée sur le profil interne des tunnels (5), à la sortie dudit tunnel.

4. Ensemble (30) de détection selon l'une quelconque des revendications 1 à 3, dans lequel les tunnels (5) cylindriques sont venus de matière avec le boîtier (15) de détection.

5. Ensemble (30) de détection selon l'une quelconque des revendications 1 à 3, dans lequel les tunnels (5) cylindriques sont des inserts (10) fixés dans des trous prévus à cet effet dans le boîtier (15) de détection.

6. Ensemble (30) de détection selon l'une quelconque des revendications 1 ou 5, dans lequel le niveau de serrage de chacun des anneaux (4) de serrage est réglé par une vis (8) traversant l'anneau et coopérant avec la plaque (2) de fixation.

7. Ensemble (30) de détection selon l'une quelconque des revendications 1 ou 5, dans lequel le serrage de chacun des anneaux (4) est réglé par une vis (8) traversant l'anneau et coopérant avec un écrou (9) agencé dans la plaque (2) de fixation.

## Patentansprüche

1. Anordnung (30) zur Erfassung von Eigenschaften von Reifen, umfassend ein elektronisches Gehäuse (15) zur Erfassung von Eigenschaften von Reifen und ein System (1), um das Gehäuse (15) zur Erfassung von Eigenschaften von Reifen am Boden zu fixieren, wobei die Fixierung des Gehäuses so ausgelegt ist, dass sie den hohen Belastungen in Verbindung mit dem Darüberfahren von zahlreichen Fahrzeugen über das Gehäuse standhält, wobei das System (1) zur Fixierung am Boden Folgendes umfasst:
i) eine Fixierungsplatte (2), die eine Vielzahl von auf der Oberfläche der Fixierungsplatte verteilten Aufnahmen (3) umfasst,
ii) eine Vielzahl von kegelstumpfförmigen Spannringen (4),
iii) eine Vielzahl von zylindrischen Führungstunneln (5), die in dem Erfassungsgehäuse (15) angeordnet sind,
**dadurch gekennzeichnet, dass** die Spannringe (4) und die Führungstunnel (5) jeweils einen komplementären konischen Abschnitt (6, 7) aufweisen, der zu der Fixierungsplatte (2) hin konvergiert, wenn der Ring (4) in einem Tunnel (5) in Spannposition ist.

2. Erfassungsanordnung (30) nach Anspruch 1, wobei der konische Abschnitt (6) jedes der Ringe (4) an dem Außenprofil der Ringe im mittleren Abschnitt dieses Profils ausgebildet ist.

3. Erfassungsanordnung (30) nach einem der Ansprüche 1 oder 2, wobei der konische Abschnitt jedes der Tunnel (5) an dem Innenprofil der Tunnel (5) am Ausgang des Tunnels ausgebildet ist.

4. Erfassungsanordnung (30) nach einem der Ansprüche 1 bis 3, wobei die zylindrischen Tunnel (5) materialhomogen mit dem Erfassungsgehäuse (15) ausgebildet sind.

5. Erfassungsanordnung (30) nach einem der Ansprüche 1 bis 3, wobei die zylindrischen Tunnel (5) in zu diesem Zweck in dem Erfassungsgehäuse (15) vorgesehenen Löchern fixierte Einsätze (10) sind.

6. Erfassungsanordnung (30) nach einem der Ansprüche 1 oder 5, wobei das Ausmaß des Spannens jedes der Spannringe (4) durch eine Schraube (8) geregelt wird, die durch den Ring geht und mit der Fixierungsplatte (2) zusammenwirkt.

7. Erfassungsanordnung (30) nach einem der Ansprüche 1 oder 5, wobei das Spannen jedes der Ringe (4) durch eine Schraube (8) geregelt wird, die durch den Ring geht und mit einer in der Fixierungsplatte (2) angeordneten Mutter (9) zusammenwirkt.

## Claims

1. Tyre characteristics detection assembly (30), comprising an electronic unit (15) for detecting tyre characteristics, and a ground attachment system (1) for a unit (15) for detecting characteristics of tyres, the attachment of the unit being designed so as to withstand the significant stresses associated with having numerous vehicles drive over the unit, said ground attachment system (1) comprising:
i) an attachment plate (2) comprising a plurality of recesses (3) distributed over the surface of the attachment plate;
ii) a plurality of frustoconical clamping rings (4);
iii) a plurality of cylindrical guide tunnels (5) arranged in the detection unit (15);
said attachment system being **characterized in that** the clamping rings (4) and the guide tunnels (5) each comprise a complementary conical portion (6, 7) converging towards the attachment plate (2) when the ring (4) is in the clamping position in a tunnel (5).

2. Detection assembly (30) according to Claim 1, wherein the conical portion (6) of each of the rings (4) is shaped on the external profile of said rings, in the median portion of this profile.

3. Detection assembly (30) according to either one of Claims 1 and 2, wherein the conical portion of each of the tunnels (5) is shaped on the internal profile of the tunnels (5), at the exit from said tunnel.

4. Detection assembly (30) according to any one of Claims 1 to 3, wherein the cylindrical tunnels (5) are integrally formed with the detection unit (15).

5. Detection assembly (30) according to any one of Claims 1 to 3, wherein the cylindrical tunnels (5) are inserts (10) fixed in holes provided for this purpose in the detection unit (15).

6. Detection assembly (30) according to either one of Claims 1 and 5, wherein the level of clamping of each of the clamping rings (4) is adjusted by a screw (8) passing through the ring and cooperating with the attachment plate (2).

7. Detection assembly (30) according to either one of Claims 1 and 5, wherein the clamping of each of the rings (4) is adjusted by a screw (8) passing through the ring and cooperating with a nut (9) arranged in the attachment plate (2).
